# EUROPÄISCHE PATENTSCHRIFT

(11) **EP 2 846 144 B1**
(45) Veröffentlichungstag und Bekanntmachung des Hinweises auf die Patenterteilung: **14.02.2018**
(21) Anmeldenummer: 14181241.2
(22) Anmeldetag: 18.08.2014
(51) Int. Cl.: G01L 9/00, G01L 19/06, G01L 23/10, G01L 23/18

(54) **Drucksensor, vorzugsweise für den Einsatz in heissen dynamischen Prozessen**
Pressure sensor, preferably for use in hot dynamic processes
Capteur de pression, de préférence pour l'utilisation dans des processus dynamiques chauds

(30) Priorität: 05.09.2013 AT 505532013
(43) Veröffentlichungstag der Anmeldung: 11.03.2015
(73) Patentinhaber: Piezocryst Advanced Sensorics GmbH, 8020 Graz (AT)
(72) Erfinder: Strmsek, Robert, 2327 Race (SI); Baumgartner, Martin, 8522 Gross St. Florian (AT); Kröger, Dietmar, 8010 Graz (AT)
(74) Vertreter: Babeluk, Michael

(56) Entgegenhaltungen:
- EP-B1- 2 087 333
- AT-B- 258 610
- AT-B- 383 895
- DE-B3- 10 312 491
- GB-A- 2 344 179

## Beschreibung

Die Erfindung betrifft einen Drucksensor, vorzugsweise für den Einsatz in heißen dynamischen Prozessen, mit einem Sensorgehäuse, das einen Messwandler aufnimmt und mit einem druckseitig angeordneten Membranelement, das einen zentralen Membranstempel aufweist, der von einer kreisringförmigen Membran umgeben ist, wobei druckseitig am Membranstempel eine den Wärmeeintrag in das Membranelement beeinflussende Abschirmung befestigt ist.

Sensoren für die Druckmessung in heißen dynamischen Prozessen, beispielsweise eingesetzt in eine Messbohrung der Brennraumbegrenzung einer Brennkraftmaschine oder einer Turbine, sind extremen Wärmeströmen und Druckpulsen ausgesetzt. Diese Wärmeströme führen zu sehr hohen Temperaturen im Sensor, die durch die dynamische Beaufschlagung zu einer Verspannung im Sensorelement und zu einer Verschlechterung der Messeigenschaften führen können. Es sind daher bereits unterschiedliche Maßnahmen bekannt geworden, die sensible Frontpartie des Sensors, insbesondere das dort angeordnete Membranelement zu schützen, wobei jedoch durch die Schutzeinrichtung das Messverhalten des Sensors möglichst ungestört bleiben soll.

Aus der EP 2 440 900 B1 ist in diesem Zusammenhang ein druckseitig mit geringem Abstand vor einem Membranelement eines Drucksensors eingesetztes Thermoschutzelement bekannt geworden, wobei das Membranelement aus einem zentralen Membranstempel, einer kreisringförmigen Membran und einem mit dem Sensorgehäuse verschweißten Membranflansch besteht. Das Thermoschutzelement, das die gesamte Membranoberfläche abdeckt, weist im Bereich der Sensormembran parallel verlaufende oder als Kreisbogensegmente ausgebildete Lammellen auf, die 40% bis 60% der Membranfläche abdecken, wobei im Vergleich zu deren Querschnittshöhe sehr dünne Lammellen mit engen Spalten ausgebildet sind. Bei diesem klassischen Thermoschutz, der die gesamte Membran abdeckt, ist ein geringer Spalt zwischen Membran und Thermoschutz ausgebildet, in welchem Verbrennungsrückstände eindringen können. Dadurch ist ein Verkoken des Spaltes möglich, wodurch die Messeigenschaften des Sensors verändert werden bzw. ein regelmäßiges Reinigen erforderlich ist.

Die AT 374.922 B beschreibt einen Druckgeber zum Messen des Druckes heißer Medien. Das vom zu messenden Druck beaufschlagte Membranelement weist einen verstärkten Mittelteil auf und daran radial anschließend eine kreisringförmige Membran deren Außenring mit dem Sensorgehäuse verschweißt ist. Weiters ist ein die kreisringförmige Membran übergreifender Hitzeschild direkt am verstärkten Mittelteil des Membranelementes angeformt, wodurch der flexible Teil des Membranelements für hochdynamische Druckmessungen nicht frei zugängig ist. Weiters neigt der enge Spalt zwischen Hitzeschild und kreisringförmiger Membran zum Verkoken, wodurch die Messeigenschaften des Druckgebers beeinträchtigt werden.

Aus der EP 2 087 333 B1 ist weiters ein Drucksensor für Messungen in heißen, dynamischen Prozessen bekannt geworden, dessen Membranelement eine kreisringförmige Membran aufweist, wobei im Inneren ein Membranstempel ausgebildet ist. Ein über die eigentliche Membranebene ragender zylindrischer Gehäusefortsatz dieses Sensors ist mit einem Hitzeschild ausgestattet bzw. ummantelt, wobei der Hitzeschild vom zylindrischen Gehäusefortsatz durch einen Spalt beabstandet und nur an dessen Rändern mit dem Gehäuse verschweißt ist. Auch der Membranstempel, welcher innerhalb des Gehäusefortsatzes angeordnet ist, ist mit einem derartigen Hitzeschild ummantelt, der am inneren Auflager der kreisringförmigen Membran mit dem Membranstempel verschweißt ist. Der Großteil der Membran ist somit durch den äußeren und den inneren Hitzeschild gut vor Wärme geschützt, wobei der kreisringförmige, flexible Teil der Membran für die Druckbeaufschlagung frei zugängig ist. Nachteilig bei dieser Ausgestaltung ist die Tatsache, dass asymmetrisch auf den Frontbereich des Drucksensors auftreffende Wärmeströme über das innere Auflager einen asymmetrischen Wärmeeintrag in die kreisringförmige Membran bewirken, was zu Messfehlern führen kann.

Die AT 383.895 B offenbart in einer Ausführungsvariante gemäß Fig. 3 eine Thermoschutzscheibe eines Druckaufnehmers aus mehreren Schichten, die auch den dünnen, kreisringförmigen Bereich der Membran abdecken, womit dieser nicht für die hochdynamische Druckmessung frei zugängig ist.

Aus der AT 258.610 B ist eine brennraumseitige Abschirmung eines Drucksensors bekannt, bei der es sich um einen wärmeisolierenden Belag handelt, der für hochdynamische Druckmessungen ungeeignet ist.

Aufgabe der Erfindung ist es, ausgehend von Drucksensoren der eingangs beschriebenen Art eine Verbesserung der frontseitigen Abschirmung derart vorzuschlagen, dass auch asymmetrisch auf den Sensor einwirkende thermische Belastungen derart modelliert werden können, dass die positiven Messeigenschaften auch in hochdynamischen Prozessen beibehalten werden können.

Diese Aufgabe wird gemäß einer ersten Variante der Erfindung dadurch gelöst, dass die Abschirmung als Verteilerkappe ausgebildet ist, die mit einer zentralen Aufnahme oder Öffnung ausgestattet ist, die eine Anformung des Membranstempels aufnimmt und thermisch kontaktiert, wobei zwischen der druckseitigen Oberfläche des Membranstempels und der Verteilerkappe - radial anschließend an den Zentralbereich - ein den Wärmefluss in diesem Bereich verringernder oder verhindernder Spalt ausgebildet ist und die kreisringförmige Membran für die hochdynamische Druckmessung frei zugängig bleibt.

Gemäß einer zweiten Variante der Erfindung ist vorgesehen, dass die Abschirmung als Verteilerkappe ausgebildet ist, die in deren Zentralbereich wärmeleitend entweder direkt mit der druckseitigen Oberfläche im Zentrum des Membranstempels oder mit einer zentralen Anformung des Membranstempels verbunden ist, wobei zwischen der druckseitigen Oberfläche des Membranstempels und der Verteilerkappe - radial anschließend an den Zentralbereich - ein den Wärmefluss in diesem Bereich verringernder oder verhindernder Spalt ausgebildet ist und die kreisringförmige Membran für die hochdynamische Druckmessung frei zugängig bleibt. Bei dieser Variante ist die Verteilerkappe in deren Zentralbereich geschlossen ausgeführt und mit dem Membranstempel verschweißt (z.B. durch Widerstandsschweißen) oder verlötet.

Über diese zentral am Membranstempel angeordnete Anformung oder Schweißstelle wird die durch die Verteilerkappe aus den einzelnen Randbereichen der Kappe in unterschiedlicher Menge aufgenommene thermische Energie zentral in das Membranelement eingeleitet. Durch geeignete Wahl der Geometrie und Anbindung an den zentralen Membranteil, kann die dynamische Wärmedehnung sowie der Temperaturgradient der Gesamtmembran positiv für die Messeigenschaften beeinflusst werden. Die Verteilerkappe dient somit dazu, den dynamischen Wärmeeintrag in das Membranelement zu modifizieren (im Gegensatz zu einem Thermoschutz, welcher die gesamte Membran abdeckt und den Wärmeeintrag lediglich reduziert).

Erfindungsgemäß kann die Verteilerkappe im Bereich der zentralen Aufnahme oder Öffnung mit der Anformung des Membranstempels reibschlüssig verbunden oder bevorzugt verschweißt sein.

Gemäß einer Ausführungsvariante der Erfindung weist der Membranstempel einen im Wesentlichen zylindrisch ausgebildeten Mantelbereich auf, der zumindest teilweise von einem zylindrischen Halteflansch der Verteilerkappe abgedeckt oder umfasst ist.

Zur besseren Modifizierung des Wärmeflusses in der Verteilerkappe kann diese in deren radialen Bereich Öffnungen oder unterschiedliche Materialstärken aufweisen. Die Öffnungen können unterschiedliche Formen und Größen aufweisen und radial asymmetrisch verteilt sein.

Die Erfindung wird im Folgenden anhand von Ausführungsbeispielen näher erläutert. Es zeigen:
- Fig. 1: einen erfindungsgemäßen Drucksensor integriert in eine Zündkerze in einer teilweisen Axialschnittdarstellung;
- Fig. 2: einen erfindungsgemäßen Drucksensor eingesetzt in eine Messbohrung in einer teilweisen Axialschnittdarstellung;
- Fig. 3: eine vergrößerte Detailansicht des Drucksensors nach Fig. 1 oder Fig. 2 im Bereich des Membranelementes in einer Schnittdarstellung;
- Fig. 4: bis Fig. 6 Ausführungsvarianten der Detailansicht gemäß Fig. 3; sowie die
- Fig. 7: bis Fig. 9 jeweils in einer Schnittdarstellung und einer Draufsicht unterschiedliche Wärmeverteilerkappen des Membranelementes gemäß Fig. 3 oder Fig. 4.

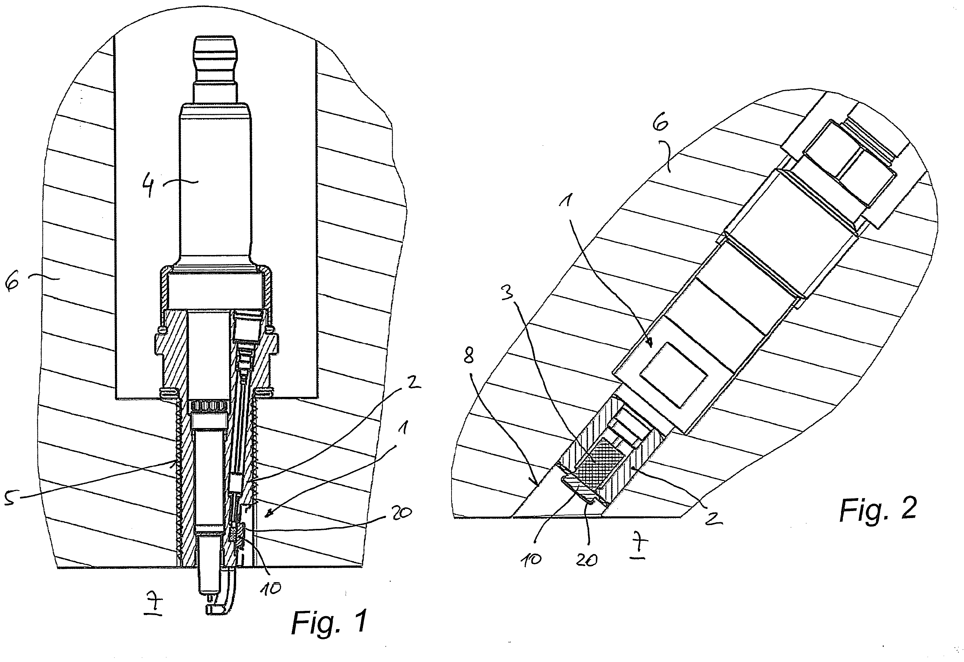

Fig. 1 zeigt eine Ausführungsvariante, bei der der Drucksensor 1 beispielsweise seitlich in die Zündkerze 4 einer hier nicht weiter dargestellten Brennkraftmaschine integriert ist. Die Zündkerze 4 ist in eine entsprechende Bohrung 5 im Zylinderkopf 6 der Brennkraftmaschine eingesetzt, wobei der Drucksensor 1 direkt vom Druck in der Brennkammer 7 beaufschlagt wird. Bedingt durch die seitliche Anordnung des Drucksensors in der Bohrung 5 und die dynamisch ablaufenden Prozesse in der Brennkammer 7, kommt es zu einer asymmetrischen thermischen Belastung des Membranelementes 10 des Sensors, die durch die erfindungsgemäße Ausstattung des Drucksensors 1 mit einer zentralen Verteilerkappe 20 ausgeglichen wird.

In der Ausführungsvariante gemäß Fig. 2 ist der Drucksensor 1 in eine separate Messbohrung 8 in die Wandung (beispielsweise den Zylinderkopf 6) einer Brennkammer 7 eingesetzt und wird ebenfalls direkt vom Druck in der Brennkammer 7 beaufschlagt. Auch hier kommt es zu einer asymmetrischen thermischen Belastung des Membranelementes 10 des Sensors, die durch die erfindungsgemäße Ausstattung des Drucksensors 1 mit einer zentralen Verteilerkappe 20 ausgeglichen wird.

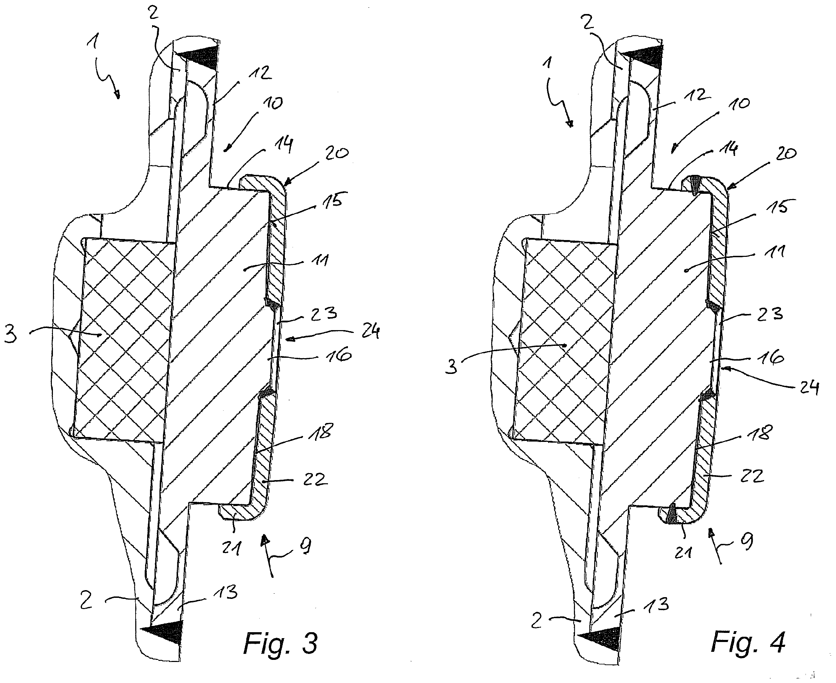

Die in den nachfolgenden Fig. 3 bis Fig. 9 dargestellten Details treffen auf beide Ausführungsvarianten gemäß Fig. 1 und Fig. 2 zu.

Der in Fig. 3 im vergrößerten Detail dargestellte Membranbereich des Drucksensors 1 zeigt den Frontbereich des Sensorgehäuses 2, einen Messwandler 3 und ein druckseitig angeordnetes Membranelement 10, das im Wesentlichen aus einem zentralen Membranstempel 11, einer kreisringförmigen Membran 12 und einem am Sensorgehäuse 2 angeschweißten Membranflansch 13 besteht.

Der Messwandler 3 weist beispielsweise hier nicht weiter dargestellte piezoelektrische Messelemente auf, kann aber auch als piezorestriktives Element oder als Dehnmessstreifen ausgebildet sein.

Für die Abfuhr und Verteilung des asymmetrisch auftreffenden Wärmestroms (siehe Pfeil 9) ist am Membranstempel 11 druckseitig eine Verteilerkappe 20 angeordnet, die in den Ausführungsvarianten gemäß Fig. 3 und Fig. 4 eine zentrale Aufnahme oder Öffnung 23 aufweist, die eine zentrale Anformung 16 des Membranstempels 11 aufnimmt und thermisch kontaktiert. Die kreisringförmige Membran 12 bleibt für die hochdynamische Druckmessung frei zugängig.

Die Verteilerkappe 2 ist im Bereich der zentralen Öffnung 23 mit der Anformung 16 des Membranstempels 11 reibschlüssig verbunden oder bevorzugt verschweißt, um für einen optimalen Wärmeübergang im zentralen Bereich des Membranstempels 11 zu sorgen.

Der Membranstempel 11 weist einen im Wesentlichen zylindrisch ausgebildeten Mantelbereich 14 auf, der zumindest teilweise (z.B. im Bereich der vorderen Kante) von einem zylindrischen Halteflansch 21 der Verteilerkappe 20 abgedeckt bzw. umfasst ist.

Wie in der Ausführungsvariante gemäß Fig. 4 dargestellt, kann der Halteflansch 21 der Verteilerkappe 20 den Mantelbereich 14 des Membranstempels 11 reibschlüssig umfassen, um ein Eindringen von Verbrennungsrückständen zu verhindern oder mit dem Mantelbereich 14 nahe der druckseitigen Oberfläche 15 des Membranstempels 11 zumindest bereichsweise (beispielweise punktweise) verschweißt sein, wobei jedoch darauf zu achten ist, dass der Wärmefluss hauptsächlich über die Verschweißung bei der zentralen Anformung 16 des Membranstempels 11 erfolgt.

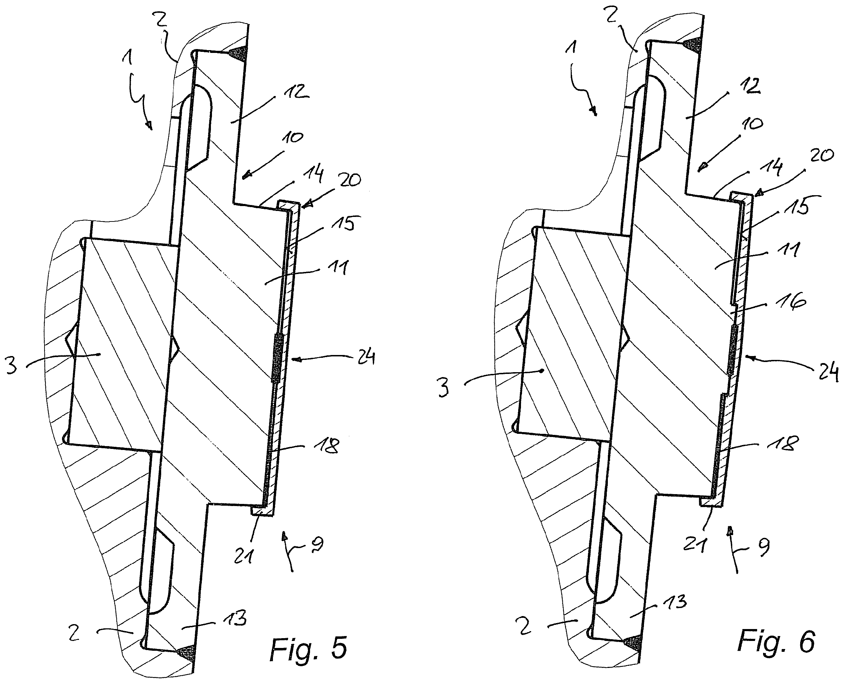

In den Ausführungsvarianten gemäß Fig. 5 und Fig. 6 weist die Verteilerkappe 20 keine zentrale Öffnung auf, sondern ist in deren Zentralbereich 24 entweder direkt mit der druckseitigen Oberfläche 15 im Zentrum des Membranstempels 11 (siehe Fig. 5) oder mit einer zentralen Anformung 16 des Membranstempels 11 verschweißt oder verlötet. Bevorzugt werden dabei der Membranstempel 11 und die Verteilerkappe 20 mittels Widerstandsschweißung verbunden.

In allen Ausführungsvarianten wird zwischen der druckseitigen Oberfläche 15 des Membranstempels 11 und der Verteilerkappe 20 radial anschließend an den Zentralbereich 24 ein den Wärmefluss in diesem Bereich verringernder oder verhindernder Spalt 18 ausgebildet sein.

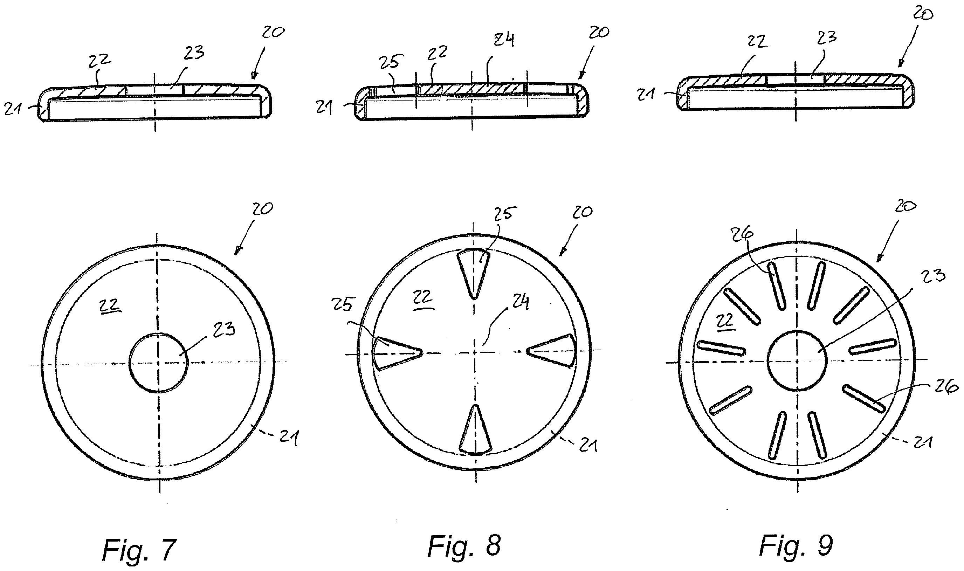

Der radiale Bereich 22 der Verteilerkappe 20 kann bis auf die zentrale Öffnung 23 geschlossen sein (siehe Fig. 7) oder auch zur besseren Modifizierung der Wärmeströme mit Öffnungen 25, 26 (siehe Fig. 8 oder Fig. 9) ausgestattet sein.

Fig. 8 zeigt eine Verteilerkappe 20 ohne zentrale Öffnung, die im Zentralbereich 24 mit dem Membranstempel 11 gemäß Fig. 5 und Fig. 6 verschweißt oder verlötet werden kann.

Die Öffnungen 26 (siehe Fig. 9) können auch radial asymmetrisch verteilt bzw. angeordnet sein oder auch unterschiedliche Formen und Größen aufweisen.

## Patentansprüche

1. Drucksensor (1), vorzugsweise für den Einsatz in heißen hochdynamischen Prozessen, mit einem Sensorgehäuse (2), das einen Messwandler (3) aufnimmt und einem druckseitig angeordneten Membranelement (10), das einen zentralen Membranstempel (11) aufweist, der von einer kreisringförmigen Membran (12) umgeben ist, wobei druckseitig am Membranstempel (11) eine den Wärmeeintrag in das Membranelement (10) beeinflussende Abschirmung befestigt ist, **dadurch gekennzeichnet, dass** die Abschirmung als Verteilerkappe (20) ausgebildet ist, die mit einer zentralen Aufnahme oder Öffnung (23) ausgestattet ist, die eine Anformung (16) des Membranstempels (11) aufnimmt und thermisch kontaktiert, wobei zwischen der druckseitigen Oberfläche (15) des Membranstempels (11) und der Verteilerkappe (20) - radial anschließend an den Zentralbereich (24) - ein den Wärmefluss in diesem Bereich verringernder oder verhindernder Spalt (18) ausgebildet ist und die kreisringförmige Membran (12) für die hochdynamische Druckmessung frei zugängig bleibt.

2. Drucksensor (1) nach Anspruch 1, **dadurch gekennzeichnet, dass** die Verteilerkappe (20) im Bereich der zentralen Aufnahme oder Öffnung (23) mit der Anformung (16) des Membranstempels (11) reibschlüssig verbunden oder verschweißt ist.

3. Drucksensor (1), vorzugsweise für den Einsatz in heißen hochdynamischen Prozessen, mit einem Sensorgehäuse (2), das einen Messwandler (3) aufnimmt und einem druckseitig angeordneten Membranelement (10), das einen zentralen Membranstempel (11) aufweist, der von einer kreisringförmigen Membran (12) umgeben ist, wobei druckseitig am Membranstempel (11) eine den Wärmeeintrag in das Membranelement (10) beeinflussende Abschirmung befestigt ist, wobei die Abschirmung als Verteilerkappe (20) ausgebildet ist, die in deren Zentralbereich (24) wärmeleitend entweder direkt mit der druckseitigen Oberfläche (15) im Zentrum des Membranstempels (11) oder mit einer zentralen Anformung (16) des Membranstempels (11) verbunden ist, wobei zwischen der druckseitigen Oberfläche (15) des Membranstempels (11) und der Verteilerkappe (20) - radial anschließend an den Zentralbereich (24) - ein den Wärmefluss in diesem Bereich verringernder oder verhindernder Spalt (18) ausgebildet ist und die kreisringförmige Membran (12) für die hochdynamische Druckmessung frei zugängig bleibt.

4. Drucksensor (1) nach Anspruch 3, **dadurch gekennzeichnet, dass** die Verteilerkappe (20) in deren Zentralbereich (24) mit dem Zentrum des Membranstempels (11) verschweißt oder verlötet ist.

5. Drucksensor (1) nach einem der Ansprüche 1 bis 4, **dadurch gekennzeichnet, dass** der Membranstempel (11) einen im Wesentlichen zylindrisch ausgebildeten Mantelbereich (14) aufweist, der zumindest teilweise von einem zylindrischen Halteflansch (21) der Verteilerkappe (20) abgedeckt oder umfasst ist.

6. Drucksensor nach Anspruch 5, **dadurch gekennzeichnet, dass** der Halteflansch (21) der Verteilerkappe (20) den Mantelbereich (14) des Membranstempels (11) reibschlüssig umfasst oder mit diesem nahe der druckseitigen Oberfläche (15) des Membranstempels (11) zumindest bereichsweise verschweißt ist.

7. Drucksensor (1) nach einem der Ansprüche 1 bis 6, **dadurch gekennzeichnet, dass** die Verteilerkappe (20) in deren radialen Bereich (22) Öffnungen (25, 26) aufweist.

8. Drucksensor (1) nach Anspruch 7, **dadurch gekennzeichnet, dass** die Öffnungen (26) der Verteilerkappe (20) radial asymmetrisch verteilt sind.

9. Drucksensor (1) nach Anspruch 7 oder 8, **dadurch gekennzeichnet, dass** die Verteilerkappe (20) Öffnungen (25, 26) unterschiedlicher Form und Größe aufweist.

10. Drucksensor (1) nach einem der Ansprüche 1 bis 9, **dadurch gekennzeichnet, dass** der Drucksensor (1) in einer Zündkerze integriert ist.

11. Drucksensor (1) nach einem der Ansprüche 1 bis 10, **dadurch gekennzeichnet, dass** der Messwandler (3) ein piezoelektrisches oder piezorestriktives Element oder einen Dehnmessstreifen aufweist.

## Claims

1. Pressure sensor (1), preferably for use in hot, highly dynamic processes, having a sensor housing (2) which accommodates a measuring transducer (3) and a membrane element (10) arranged on the pressure side, which has a central membrane stamp (11) which is surrounded by an annular membrane (12), wherein on the pressure side a shield is attached to the membrane stamp (11) which influences the heat input into the membrane element (10), **characterised in that** the shield is designed as a distributor cap (20) having a central receptacle or opening (23), which accommodates an integral shaped piece (16) of the membrane stamp (11) and thermally contacts said piece, wherein a gap (18) reducing or preventing the heat flow in this area is formed between the pressure-side surface (15) of the membrane stamp (11) and the distributor cap (20), radially adjacent to the central region (24), and the annular membrane (12) remains freely accessible for the highly dynamic pressure measurement.

2. Pressure sensor (1) according to claim 1, **characterised in that** the distributor cap (20) is frictionally connected or welded to the integral shaped piece (16) of the membrane stamp (11) in the region of the central receptacle or opening (23).

3. Pressure sensor (1), preferably for use in hot, highly dynamic processes, having a sensor housing (2) which accommodates a measuring transducer (3) and a membrane element (10) arranged on the pressure side, which has a central membrane stamp (11) which is surrounded by an annular membrane (12), wherein on the pressure side a shield is attached to the membrane stamp (11) which influences the heat input into the membrane element (10), wherein the shield is designed as a distributor cap (20) which in its central region (24) is connected in a heat-conducting manner either directly to the pressure-side surface (15) in the centre of the membrane stamp (11) or to a central integral shaped piece (16) of the membrane stamp (11), wherein a gap (18) reducing or preventing the heat flow in this area is formed between the pressure-side surface (15) of the membrane stamp (11) and the distributor cap (20), radially adjacent to the central region (24), and the annular membrane (12) remains freely accessible for the highly dynamic pressure measurement.

4. Pressure sensor (1) according to claim 3, **characterised in that** the distributor cap (20) is welded or soldered in its central region (24) to the centre of the membrane stamp (11).

5. Pressure sensor (1) according to one of the claims 1 to 4, **characterised in that** the membrane stamp (11) has a substantially cylindrically shaped jacket region (14), which is at least partially covered or enclosed by a cylindrical retaining flange (21) of the distributor cap (20).

6. Pressure sensor according to claim 5, **characterised in that** the retaining flange (21) of the distributor cap (20) frictionally encloses the jacket region (14) of the membrane stamp (11) or is welded thereto at least in sections near the pressure-side surface (15) of the membrane stamp (11).

7. Pressure sensor (1) according to one of the claims 1 to 6, **characterised in that** the distributor cap (20) has openings (25, 26) in its radial region (22).

8. Pressure sensor (1) according to claim 7, **characterised in that** the openings (26) of the distributor cap (20) are distributed radially asymmetrically.

9. Pressure sensor (1) according to claim 7 or 8, **characterised in that** the distributor cap (20) has openings (25, 26) of different shape and size.

10. Pressure sensor (1) according to one of the claims 1 to 9, **characterised in that** the pressure sensor (1) is integrated in a spark plug.

11. Pressure sensor (1) according to one of the claims 1 to 10, **characterised in that** the measuring transducer (3) has a piezoelectric or piezorestrictive element or a strain gauge.

## Revendications

1. Capteur de pression (1) destiné de préférence à être mis en oeuvre dans des procédés très dynamiques chauds comportant un boîtier de capteurs (2) qui reçoit un transducteur de mesure (3) et un élément de membrane (10) monté côté pression qui comporte un poinçon de membrane central (11) qui est entouré par une membrane (12) en forme de bague circulaire, côté pression, étant fixé sur le poinçon de membrane (11) un écran de protection agissant sur l'apport de chaleur dans l'élément de membrane (10),
**caractérisé en ce que**
l'écran de protection est réalisé sous la forme d'un capuchon répartiteur (20) qui est équipé d'un logement central ou d'une ouverture centrale (23) qui reçoit un bossage (16) du poinçon de membrane (11) et le met en contact thermique, entre la surface située côté pression (15) du poinçon de membrane (11) et le capuchon répartiteur (20) étant formé - en connexion radiale avec la zone centrale (24) - une fente (18) diminuant ou supprimant le flux thermique dans cette zone, et la membrane en forme de bague circulaire (12) restant librement accessible pour permettre la mesure de pression très dynamique.

2. Capteur de pression (1) conforme à la revendication 1,
**caractérisé en ce que**
le capuchon répartiteur (20) est relié par une liaison par friction au bossage (16) du poinçon de membrane (11), dans la zone du logement central ou de l'ouverture centrale (23) ou est soudé sur celui-ci.

3. Capteur de pression (1) destiné de préférence à être mis en oeuvre dans des procédé très dynamiques chauds, comprenant un boîtier de capteur (2) qui reçoit un transducteur de mesure (3) et un élément de membrane (10) monté côté pression qui comporte un poinçon de membrane central (11) qui est entouré par une membrane (12) en forme de bague circulaire, côté pression, étant fixé sur le poinçon de membrane (11) un écran de protection agissant sur l'apport de chaleur dans l'élément de membrane (10),
l'écran de protection étant réalisé sous la forme d'un capuchon répartiteur (20) qui est relié en conduction thermique dans sa zone centrale (24), soit directement avec la surface (15) située côté pression au centre du poinçon de membrane (11), soit avec un bossage central (16) du poinçon de membrane, et, entre la surface située côté pression (15) du poinçon de membrane (11) et le capuchon répartiteur (20) étant formé -en connexion radiale avec la zone centrale (24), une fente (18) diminuant ou supprimant le flux thermique dans cette zone, et la membrane en forme de bague circulaire (12) restant librement accessible pour permettre la mesure de pression très dynamique.

4. Capteur de pression (1) conforme à la revendication 3,
**caractérisé en ce que**
dans sa zone centrale (24) le capuchon répartiteur (20) est soudé ou brasé au centre du poinçon de membrane (11).

5. Capteur de pression (1) conforme à l'une des revendications 1 à 4,
**caractérisé en ce que**
le poinçon de membrane (11) comporte une zone enveloppe (14) essentiellement cylindrique qui est recouverte au moins en partie par une bride de retenue cylindrique (21) du capuchon répartiteur (20) ou est entourée par celle-ci.

6. Capteur de pression conforme à la revendication 5,
**caractérisé en ce que**
la bride de retenue (21) du capuchon répartiteur (20) entoure par une liaison par friction la zone enveloppe (14) du poinçon de membrane (11) ou est soudée au moins par zones sur celui-ci à proximité de la surface (15) située côté pression du poinçon de membrane (11).

7. Capteur de pression (1) conforme à l'une des revendications 1 à 6,
**caractérisé en ce que**
le capuchon répartiteur (20) comporte des ouvertures (25, 26) dans sa zone radiale (22).

8. Capteur de pression (1) conforme à la revendication 7,
**caractérisé en ce que**
les ouvertures (26) du capuchon répartiteur (20) sont réparties radialement de façon asymétrique.

9. Capteur de pression (1) conforme à la revendication 7 ou 8,
**caractérisé en ce que**
le capuchon répartiteur (20) comporte des ouvertures (25, 26) de formes et de dimensions différentes.

10. Capteur de pression (1) conforme à l'une des revendications 1 à 9,
**caractérisé en ce que**
le capteur de pression (1) est intégré dans une bougie d'allumage.

11. Capteur de pression (1) conforme à l'une des revendications 1 à 10,
**caractérisé en ce que**
le transducteur (3) comporte un élément piézoélectrique ou piézorestrictif ou une bande de mesure d'allongement.
